# EUROPEAN PATENT APPLICATION

(11) **EP 1 369 811 A1**
(43) Date of publication of application: **10.12.2003**
(21) Application number: 03252766.5
(22) Date of filing: 01.05.2003
(51) Int. Cl.: G06K 1/00, G06K 19/08, G09F 7/00, H03M 13/29, G06F 11/08, B23Q 3/155, G05B 19/12

(54) **Information system**

(30) Priority: 06.06.2002 JP 2002165746
(71) Applicant: Big Daishowa Seiki Co., Ltd., Higashi-Osaka-shi 579-8013 (JP); Big Alpha Co., Inc., Goshikicho Tsuna-gun, Hyogo 656-2400 (JP)
(72) Inventor: Komine, Tsuyoshi, Big Alpha Co., Inc., Tsuna-gun, Hyofo 656-2400 (JP); Nakajima, Hidehito, Big Daishowa Seiki Co., Ltd., Higashi-Osaka-shi, Osaka, 579-8013 (JP)
(74) Representative: McLeish, Nicholas Alistair Maxwell

(57) **Abstract**

The present invention provides an information system and an information-holding unit wherein an information carrier with specific information stored therein is mounted on a mounting body (11) of the information-holding unit, and the mounting body is also provided with ID information, thereby making it possible to also use the ID information in order to refer to information about the mounting body. An information system (100) comprises an information carrier with specific information stored therein, and a mounting body for mounting the information carrier, and the information system (100) refers to information about the mounting body on the basis of the specific information. The mounting body is provided with ID information, thereby making it possible to also use the ID information in order to refer to the same information as the information referred to on the basis of the specific information stored in the information carrier.

## Description

### Field of the Invention

The present invention relates to an information system which comprises an information carrier with specific information stored therein, and a mounting body for mounting the information carrier, and which refers to information about the mounting body on the basis of the specific information. This invention also relates to an information-holding unit used in this system.

### Description of the Related Art

An information-holding unit has been used and made by mounting, on various articles (or mounting bodies), an information carrier such as a magnetic card, an lC (integrated circuit) card, a bar code, or RFID (Radio Frequency Identification) that stores specific information about these articles (or mounting bodies). Systems that use information-holding units such as this, for example, for identification, collating, management, or conveyance of the above-mentioned articles, are employed in a wide-range of areas such as distribution, FA (Factory Automation), and medical care.

Recently, a non-contact automatic identification system that utilizes RFID techniques capable of reading, without any contact, an lC chip as an information carrier on which information is written, has been widely used, for example, in product assembly and conveying line systems, inspection lines, product management, product inventory and order management, work information management, and tool management. For example, at manufacturing plants or other locations, the non-contact automatic identification system is used to attach lC chips to tools for machine tools, to prevent errors in attaching the tools to the machine tools, to improve efficiency in arrangement, acknowledge history of the relevant tools, register offset information automatically, and to conduct location management. Moreover, PC networks are utilized to share information about manufacturing plants (or job sites), thereby enhancing the efficiency and quality of the production and accumulation of processing know-how.

Concerning this conventional information-holding unit, it is sometimes no longer possible to recognize the information stored in the information carrier, for example, when the information carrier mounted on the mounting body suffers any damage or breaks down due to mishandling. In cases such as this, it is only possible to determineinformation that can be recognized from the outward appearance of the mounting body (or article) on which the broken information carrier is mounted. Such information includes, for example, the model type or product name displayed on the mounting body.

If the conventional information-holding unit can no longer recognize the information stored in the information carrier due to, for example, a breakdown of the information carrier, it is possible to find, for example, the price of the mounting body from the model type or product name, but it is impossible to determine any unique information about the mounting body from the model type or product name. Accordingly, in this situation it is no longer possible to find a variety of information as stated above in the description of the related art.

### SUMMARY OF THE INVENTION

The present invention aims to solve the above-described problem with the conventional information system and information-holding unit. It is the object of this invention to provide an information system and an information-holding unit wherein an information carrier with specific information stored therein is mounted on a mounting body of the information-holding unit, and the mounting body is provided with ID information, thereby making it possible to also use this ID information in order to refer to information about the mounting body.

In order to achieve this object, this invention provides an information system comprising: an information carrier with specific information stored therein; and a mounting body for mounting the information carrier; wherein the information system is capable of referring to information about the mounting body on the basis of the specific information, and wherein the mounting body is provided with ID information, thereby making it possible to also use the ID information in order to refer to the same information as the information referred to on the basis of the specific information stored in the information carrier.

This invention also provides an information-holding unit comprising: an information carrier with specific information stored therein; and a mounting body for mounting the information carrier; wherein the information-holding unit is capable of referring to information about the mounting body on the basis of the specific information, and wherein the mounting body has further ID information, thereby making it possible to also use the ID information in order to refer to the same information as the information referred to on the basis of the specific information stored in the information carrier.

The information system and the information-holding body having the above-described structures can refer to the information about the mounting body also from the ID information that the mounting body itself possesses. Accordingly, even if it is no longer possible to recognize the information stored in the information carrier due to, for example, breakdown of the information carrier, it is possible to use the ID information in order to refer to the information that should originally be referred to on the basis of the specific information stored in the information carrier. It is also possible to manufacture a new information carrier or to restore the information stored in the information carrier.

The ID information may be the same or different information to that of the specific information. Moreover, the ID information may be a production serial number.

Furthermore, concerning the information system and the information-holding unit of this invention, it is possible to provide the mounting body with a plurality of information carriers and to cause the mounting body to have ID information corresponding to each of the plural information carriers. Accordingly, in addition to the above-described advantageous effects, by providing a plurality of information carriers, it is possible to increase the storage capacity as a whole without changing the storage capacity of the respective information carriers themselves and without extending the communication time of the information. Moreover, even if the type of information-holding unit that saves power in an IC chip by using high-frequency waves to be transmitted as a power source, and operates with the saved power as the power source is used, a larger amount of driving power per information carrier will not be required.

The ID information may be a symbol, and this symbol can be placed on the mounting body in the state where the symbol can be visually identified.

Moreover, examples of the mounting body include a variety of articles such as tool holders, work-mounting jigs, cutters, cutter cartridges, lathes, portable remote terminals, various kinds of components, automatic guided vehicles, various kinds of containers, and various kinds of devices.

### BRIEF DESCRIPTION OF THE DRAWINGS

Fig. 1 is a front view of the information-holding unit according to an embodiment of this invention.
Fig. 2 is a diagrammatic illustration of the concept of the system using the information-holding unit of Fig. 1.
Fig. 3 is a block diagram of the system of Fig. 2, which uses the information-holding unit.
Fig. 4 illustrates one example of a database of a control device that is a component of the information system according to the embodiment of this invention.
Fig. 5 illustrates one example of a database of a control device that is a component of the information system according to the embodiment of this invention.
Fig. 6 illustrates one example of a service screen displayed on a display that is a component of the information system according to the embodiment of this invention.

### DETAILED DESCRIPTION OF THE PREFERRED EMBODIMENT

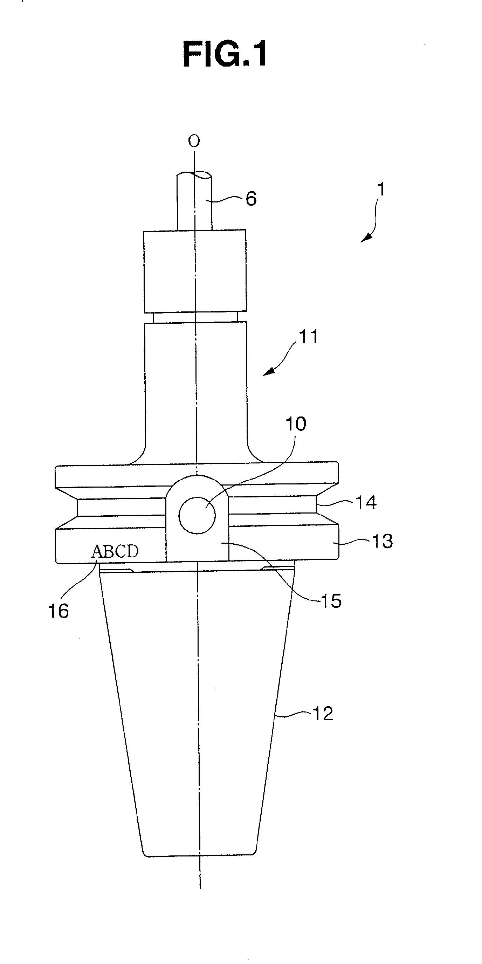

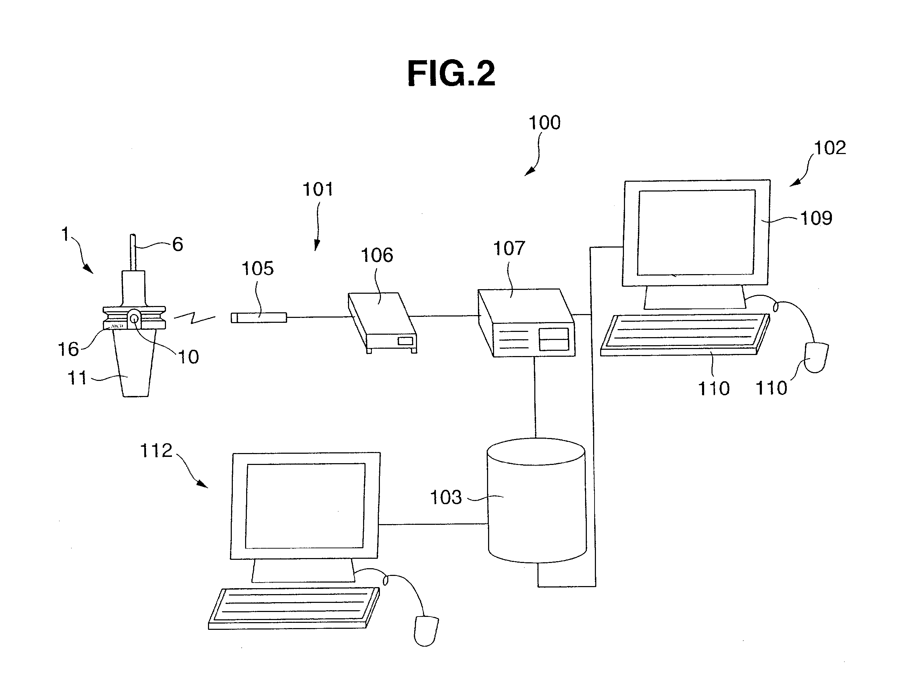

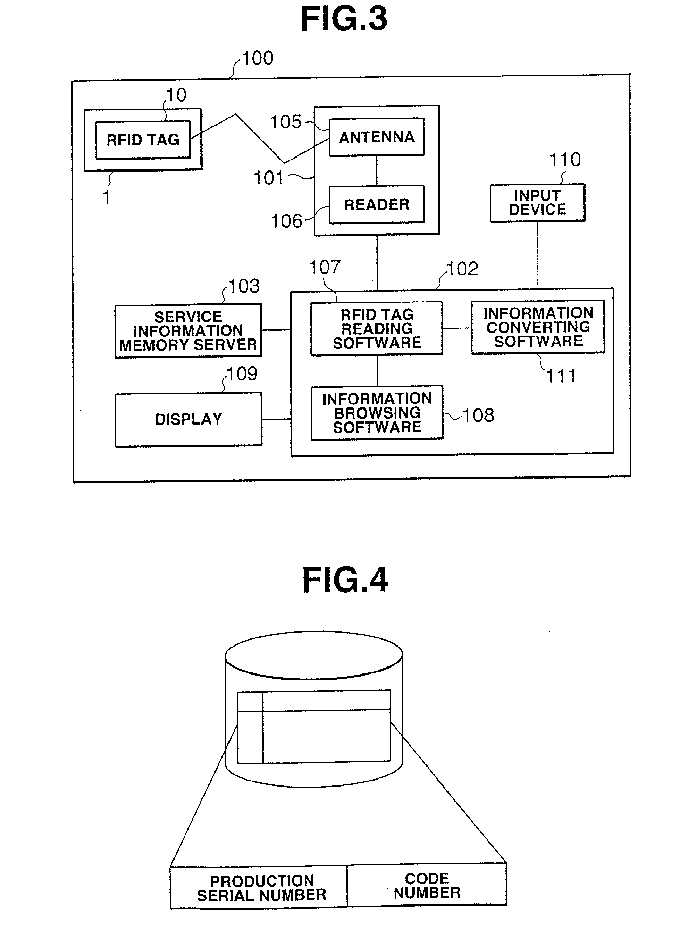

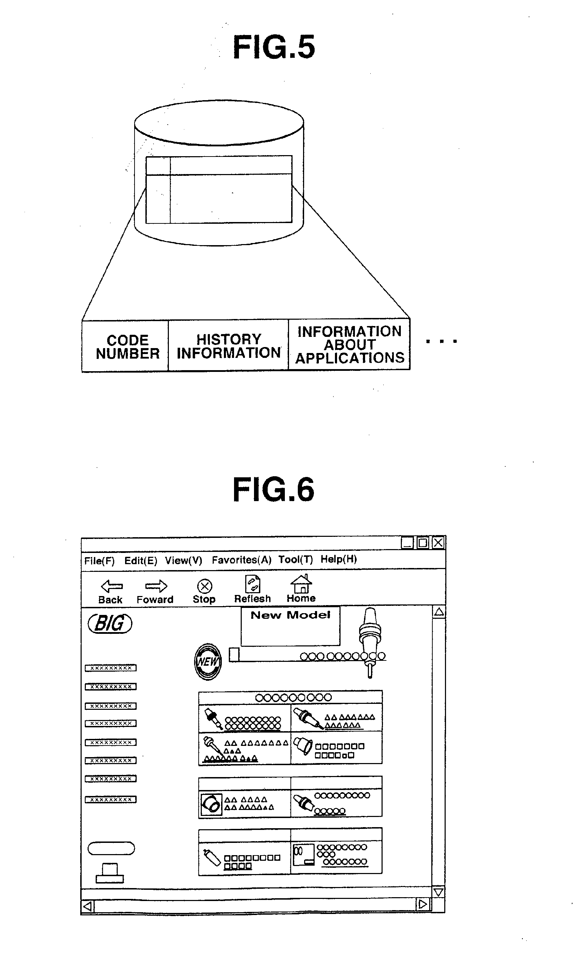

The information system and the information-holding unit according to the embodiment of this invention are explained with reference to the attached drawings. Fig. 1 is a front view of the information-holding unit according to an embodiment of this invention. Fig. 2 is a diagrammatic illustration of the concept of the system using the information-holding unit of Fig. 1. Fig. 3 is a block diagram of the system of Fig. 2, which uses the information-holding unit. Figs. 4 and 5 both illustrate examples of a database of a control device that is a component of the information system according to the embodiment of this invention. Fig. 6 illustrates one example of a service screen displayed on a display that is a component of the information system according to the embodiment of this invention.

An information-holding unit 1 shown in Fig. 1 comprises an RFID tag 10 as an information carrier, and a tool holder 11 as a mounting body for mounting the RFID tag 10.

The RFID tag 10 stores a code number as specific information about the tool holder 11. Concerning this embodiment, the type of information carrier that saves power within the tag by using high-frequency waves to be transmitted as a power source and operates with the saved power as the power source is used as the RFID tag 10.

The tool holder 11 has a reference rotation axis O, and a cutter 6 is mounted at the top end thereof. This tool holder 11 has a tapered shank 12 which engages with a tapered hole in a spindle of a machine tool (not shown in Fig. 1). The tool holder 11 also has a flange 13 which is formed in connection with the tapered shank 12 so as to be opposite the end face of the spindle. This flange 13 has, on its outer surface, a groove 14 to be held by a well-known manipulator. A concave part 15 is formed on the outer surface of the flange 13. The RFID tag 10 is mounted on this concave part 15. Moreover, on the outer surface of the flange 13 and in the vicinity of the concave part 15, a production serial number 16 as the ID information is imprinted, for example, by laser.

At the time of manufacturing of this information-holding unit 1, when the tool holder 11 as the mounting body is first manufactured, the production serial number is imprinted by laser in the vicinity of the concave part 15 of the tool holder 11 and this production serial number and the model type are entered into a computer. This computer has a table (see Fig. 4) which correlates the production serial number and model type of the tool holder 11 with the code number, and outputs the code number corresponding to the entered production serial number and model type. This code number is then stored in the RFID tag 10. The RFID tag 10 is mounted on the tool holder 11.

An information system 100 using the information-holding unit 1 is hereinafter explained with reference to the relevant drawings.

As shown in Figs. 2 and 3, the system 100 using the information-holding unit 1 comprises: a reading device 101 for reading information from the RFID tags 10; a control device 102 for processing the information read by the reading device 101; a service information memory server 103 connected via a network to the control device 102; an input device 110 connected to the control device 102; and a display 109.

The reading device 101 comprises an antenna 105 for receiving information from the RFID tags 10, and a reader 106 for reading the information received by the antenna 105.

The input device 110 consists of, for example, a keyboard, a mouse, or a scanner, and is used to enter information that a user wants to know, or to enter the production serial number displayed on the tool holder 11 of the information-holding unit 1 when it is no longer possible to read the information stored in the RFID tag 10.

The control device 102 comprises RFID tag reading software 107, information browsing software 108, and information converting software 111.

As shown in Fig. 4, the information converting software 111 has a table which correlates the production serial number and model type of the tool holder 11 that are entered from the input device 110, with the code number stored in the RFID tag 10 mounted on the tool holder 11, and outputs the code number specified according to the production serial number to the RFID tag reading software 107. In other words, as described below in detail, the information entered from the information converting software 111 into the RFID tag reading software 107 is the same information as that entered from the reading device 101.

The RFID tag reading software 107 has various menus such as history information of the tool holder, information regarding applications, arrangement instructions for the tool holder, total use time, remaining lifetime, work information management, tool inventory management, catalogues of the tool holder, manuals, specifications, recommended cutting conditions, prize points, and news relating to products.

As shown in Fig. 5, this RFID tag reading software 107 has a table which correlates the information (or the code number) entered from the reading device 101 or the information (or the code number converted according to the production serial number) entered from the information converting software 111, with specific menu items which are designated by a user and are entered from the input device 110. The RFID tag reading software 107 outputs information obtained from a search of this table to the information browsing software 108.

When the information about the menu item designated by the user is the information stored in a database within the control device 102, the information browsing software 108 searches the necessary information in this database on the basis of the information obtained from a search of the table and outputs the search results on the display 109 in an arbitrary layout.

On the other hand, if the information about the menu item designated by the user is not stored in the database within the control device 102, but will be provided by the service information memory server 103, the information browsing software 108 searches for the necessary information from the service information memory server 103 on the basis of the information obtained from a search of the above-mentioned table, and outputs the search results on the display 109 in an arbitrary layout.

As described above, the information system 100 of this invention can acquire any information, either from the information read by the reading device 101 or from the information entered from the input device 110 and via the information converting software 111. Accordingly, even if it is no longer possible to recognize the code number stored in the RFID tag 10 due to, for example, a breakdown of the RFID tag 10, it is possible to use the production serial number displayed on the tool holder 11 in order to refer to the information that should originally be referred to on the basis of the code number stored in the RFID tag 10. It is also possible to remanufacture a new RFID tag 10 or to restore the information stored in the information carrier.

Specific actions of the information system according to this embodiment are hereinafter explained.

For example, when a user wants to know the history information of the tool holder 11 of the information-holding unit 1, the reader 106 is used to read, via the antenna 105, the information (or the code number) stored in the RFID tag 10 mounted on the tool holder 11. The reading device 101 outputs the acquired information to the RFID tag reading software 107 of the control device 102. On the other hand, if the user selects the "history information" from the menu items, this information is entered into the RFID tag reading software 107 of the control device 102.

At the control device 102, the RFID tag reading software 107 refers to the table (see Fig. 5), which correlates the "code number" with the "history information," and outputs the specified information to the information browsing software 108. If this history information is stored in the database of the control device 102, the information browsing software 108 searches for the necessary information in this database on the basis of the specified information and outputs the search results to the display 109 in an arbitrary layout.

On the other hand, if it is no longer possible to recognize the information (or the code number) stored in the RFID tag 10 due to, for example, a breakdown of the RFID tag 10, the user visually observes and reads the production serial number displayed on the tool holder 11 and enters this number from the input device 110. This information is entered into the information converting software 111, which then refers to the aforementioned table (see Fig. 4) and searches for the code number corresponding to the production serial number and outputs the searched code number to the RFID tag reading software 107. Moreover, if the user selects the "history information" in the menu items, this information is entered into the RFID tag reading software 107 of the control device 102. The subsequent processing is as described above.

For example, if the user wants to know news regarding the tool holder 11, but if the news is not stored in the database of the control device 102 and is provided by the service information memory server 103 connected via a network, the user may refer to a database provided by the service information memory server 103 instead of referring to the database of the control device 102.

Concerning this embodiment, descriptions have been given about the case in which the tool holder 11, as shown in Fig. 1, is used as the mounting body for mounting the information carrier (the RFID tag 10 in this embodiment). However, the invention is not limited to such a structure, and it is possible to employ, as the mounting body, a wide variety of articles such as work mounting jigs, cutters, cutter cartridges, lathes, portable remote terminals, various kinds of components, automatic guided vehicles, various kinds of containers, and various kinds of devices.

Moreover, the information carrier is not specifically limited to the RFID tag 10, but may be anything, such as a bar code, as long as it is capable of storing the specific information.

Furthermore, concerning this embodiment, the case in which the code number for the tool holder 11 is stored in the RFID tag 10 and the production serial number is displayed on the tool holder 11 has been described. However, the invention is not limited to such a structure, and the information stored in the RFID tag 10 and the information displayed on the tool holder 11 may be identical to each other. Without being limited to the production serial number or the code number, any other specific information about the tool holder 11 may be stored in the RFID tag 10 or be displayed on the tool holder 11.

Concerning this embodiment, descriptions have been given regarding the information-holding unit having one information carrier and one piece of ID information corresponding thereto. However, the invention is not limited to such a structure, and the information-holding unit of this invention may comprise a plurality of information carriers and may have ID information corresponding to each of these plural information carriers. In this case, the information carriers can be constructed in a manner such that their colors are all different from each other. As a result, a user can easily identify the use and details of the respective information carriers and quickly and easily obtain necessary information.

Moreover, concerning this embodiment, CDs, DVDs, FDs, HDs or the like in which management information has previously been stored can be also used.

This embodiment is merely an illustration for explaining this invention, and the invention is not limited solely to this embodiment. The invention can be implemented in various embodiments unless such embodiments depart from the gist of the invention. Accordingly, as long as no contradiction arises, the invention can be constructed so that the order of processing may be changed or some operations may be performed concurrently.

As described above, this invention allows the mounting body of the information-holding unit to have the information carrier with specific information stored therein and to also have the ID information, thereby making it possible to use the ID information to refer to the information about the mounting body. Therefore, even if it is no longer possible to recognize the information stored in the information carrier due to, for example, a breakdown of the information carrier, it is possible to also use the ID information in order to refer to the information that should originally be referred to on the basis of the specific information stored in the information carrier. It is also possible to manufacture a new information carrier or to restore the information stored in the information carrier.

The entire disclosure of Japanese Patent Application No.2002-165746 filed on June 6, 2002 including specification, claims, drawings and summary are incorporated herein by reference in its entirety.

## Claims

1. An information system comprising:
an information carrier with specific information stored therein; and
a mounting body for mounting the information carrier;
wherein the information system is capable of referring to information about the mounting body on the basis of the specific information, and
wherein the mounting body is provided with ID information, thereby making it possible to also use the ID information in order to refer to the same information as the information referred to on the basis of the specific information stored in the information carrier.

2. The information system according to claim 1, wherein the ID information is the same information as the specific information.

3. The information system according to claim 1, wherein the ID information is different from the specific information.

4. The information system according to claim 3, wherein the ID information is a production serial number.

5. The information system according to claim 1, wherein a plurality of information carriers are provided, and the mounting body is provided with the ID information corresponding to each of the plural information carriers.

6. The information system according to claim 1, wherein the ID information is the same information as the specific information, a plurality of information carriers are provided, and the mounting body is provided with the ID information corresponding to each of the plural information carriers.

7. The information system according to claim 1, wherein the ID information is different from the specific information, a plurality of information carriers are provided, and the mounting body is provided with the ID information corresponding to each of the plural information carriers.

8. An information-holding unit comprising:
an information carrier with specific information stored therein; and
a mounting body for mounting the information carrier;
wherein the information-holding unit is capable of referring to information about the mounting body on the basis of the specific information, and
wherein the mounting body has further ID information, thereby making it possible to also use the ID information in order to refer to the same information as the information referred to on the basis of the specific information stored in the information carrier.

9. The information-holding unit according to claim 8, wherein the ID information is the same information as the specific information.

10. The information-holding unit according to claim 8, wherein the ID information is different from the specific information.

11. The information-holding unit according to claim 8, wherein the ID information is a symbol placed on the mounting body in the state where the symbol can be visually identified.

12. The information-holding unit according to claim 8, wherein the ID information is the same information as the specific information and is a symbol placed on the mounting body in the state where the symbol can be visually identified.

13. The information-holding unit according to claim 8, wherein the ID information is different from the specific information and is a symbol placed on the mounting body in the state where the symbol can be visually identified.

14. The information-holding unit according to claim 11, wherein the ID information is a production serial number.

15. The information-holding unit according to claim 8, wherein a plurality of information carriers are provided, and the mounting body is provided with the ID information corresponding to each of the plural information carriers.

16. The information-holding unit according to claim 8, wherein a plurality of information carriers are provided, the mounting body is provided with the ID information corresponding to each of the plural information carriers, and the ID information is the same information as the specific information.

17. The information-holding unit according to claim 8, wherein a plurality of information carriers are provided, the mounting body is provided with the ID information corresponding to each of the plural information carriers, and the ID information is different from the specific information.

18. The information-holding unit according to claim 8, wherein a plurality of information carriers are provided, the mounting body is provided with the ID information corresponding to each of the plural information carriers, and the ID information is a symbol placed on the mounting body in the state where the symbol can be visually identified.

19. The information-holding unit according to claim 8, wherein the mounting body is a tool holder.
